# EUROPÄISCHE PATENTSCHRIFT

(11) **EP 0 931 944 B1**
(45) Veröffentlichungstag und Bekanntmachung des Hinweises auf die Patenterteilung: **29.06.2011**
(21) Anmeldenummer: 99101040.6
(22) Anmeldetag: 21.01.1999
(51) Int. Cl.: F16B 33/00, C25D 7/00, C25D 3/60, C25D 3/56, F16B 33/06, B21K 1/44

(54) **Verbindungselement mit einer Zinn-Zink-Beschichtung**
Connecting element with a tin-zinc coating
Elément connecteur avec un revêtement en étain-zinc

(30) Priorität: 22.01.1998 DE 29801049 U
(43) Veröffentlichungstag der Anmeldung: 28.07.1999
(73) Patentinhaber: Newfrey LLC, Newark, Delaware 19711 (US)
(72) Erfinder: Kuehnl, Walter, 35325 Hueke (DE); Mauer, Dieter, 35457 Lollar (DE); Opper, Reinhold, 35418 Alten-Buseck (DE)
(74) Vertreter: Haar, Lucas Heinz Jörn

(56) Entgegenhaltungen:
- US-A- 5 378 346
- PATENT ABSTRACTS OF JAPAN vol. 017, no. 133 (M-1383), 19. März 1993 (1993-03-19) & JP 04 312207 A (NISUKO KK), 4. November 1992 (1992-11-04)
- PATENT ABSTRACTS OF JAPAN vol. 015, no. 398 (C-0874), 9. Oktober 1991 (1991-10-09) & JP 03 162587 A (TOKYO NETSUSHORI KOGYO KK;OTHERS: 01), 12. Juli 1991 (1991-07-12)
- BUDMAN E ET AL: "Tin-Zinc Plating" METAL FINISHING, ELSEVIER SCIENCE PUBLISHING, NEW YORK, NY, US, Bd. 93, Nr. 9, 1. September 1995 (1995-09-01), Seiten 10-15, XP004024529 ISSN: 0026-0576

## Beschreibung

Der Gegenstand der Erfindung bezieht sich auf ein Verbindungselement, das als ein Anschweißteil mit wenigstens einer Anschweißfläche ausgebildet ist und wenigstens eine Beschichtung hat, die wenigstens Zinn und Zink enthält.

Es ist bekannt, daß zur Verringerung eines Übergangswiderstands zwischen zwei elektrisch leitenden Verbindungselementen wenigstens ein Verbindungselement mit einer Zinnbeschichtung versehen wird. Bei solchen Bauteilen handelt es sich beispielsweise um einen an einer Karosseriestruktur eines Kraftfahrzeuges angeschweißten Massebolzen. Im Zuge der Einführung wasserlöslicher Lacke werden Massebolzen nicht mehr mit Zinnschichten oder Zinn enthaltenen Schichten verwendet. Die Ursache hierfür ist darin zu sehen, daß wasserlösliche Lacke bei einer Temperatur von ca. 300 °C getrocknet werden. Diese Trocknungstemperatur liegt oberhalb der Schmelztemperatur von 231,89 °C des Zinns. Eine Trocknung eines wasserlöslichen Lackes bei ca. 300 °C führt daher zu einer Zerstörung der Zinnbeschichtung.

Es ist auch bekannt, Bauteile mit einer Zinn-Zink-Beschichtung zu versehen, wobei Zinn und Zink in Pulverform vorliegt und mechanisch auf das Bauteil aufgebracht wird. Bei einem solchen Bauteil handelt es sich um ein selbststanzendes Halbhohlniet, welches als Verbindungselement für die Ausbildung einer Karosseriestruktur verwendet wird. Auch hier besteht die Gefahr, daß die Zinn-Zink-Beschichtung bei hohen Temperaturen, wie sie während eines Trocknungsprozesses eines wasserlöslichen Lackes auftreten, eine Veränderung erfährt, die zu einer Abnahme der Verbindungsfestigkeit führen kann. Insbesondere bei der Verwendung solcher Verbindungselemente für Karosseriestrukturen im sicherheitsrelevanten Bereich ist eine Verringerung der Verbindungsfestigkeit unakzeptabel.

Es ist weiterhin aus JP 04 312207 A bekannt, den Schaft einer Bohrschraube durch Eintauchen in ein Schmelzbad einer Legierung aus Zink und Zinn zu beschichten. Aus JP 03 162587 A ist ferner bekannt, Bolzen und Muttern aus rostfreiem Stahl mit einer Legierung aus Zinn und Zink zu plattieren und durch eine anschließende thermische Diffusionsbehandlung eine intermetallische Eisen-Zinn-Verbindung an der Oberfläche der Bolzen und Muttern zu bilden. Hierdurch sollen die Korrosionsbeständigkeit verbessert und die Neigung zum Fressen bei direktem Kontakt von rostfreien Bolzen und Muttern vermindert werden.

Ein galvanisches Verfahren zum Beschichten von Bauteilen, die in der Automobil- oder Flugzeugindustrie eingesetzt werden, ist aus US-A-5,378,346 bekannt. Das Beschichtungsbad enthält eine alkalische, wässrige Lösung aus einem Alkalimetallzinkat, einem Alkalimetallstannat und einem Alkalimetalltartrat. Es eignet sich vor allem für die Beschichtung von gewalztem Stahl und Kupfer, kann aber auch für Muttern, Bolzen, Halter und komplex geformte Automobilteile eingesetzt werden, die aus verschiedenen Metallen sowie aus Schweiß- und Lötverbindungen bestehen.

In der Veröffentlichung von Budman et al: "Tin-Zinc Plating" METAL FINISHING, Elsevier Science Publishing, New York, US, Bd. 93, Nr. 9, 1. September 1995, Seiten 10 - 15 (BNS Seiten 1 - 6) sind Verfahren zur galvanischen Beschichtung von Teilen aus Eisenmetallen mit Zinn und Zink und die mit diesen Verfahren erzielbaren Eigenschaften beschrieben, nämlich guter Korrosionsschutz, insbesondere bei Kontakt zwischen Stahl und Aluminium, Eignung für elektrische Kontakte wegen guter elektrischer Leitfähigkeit und gute Lötbarkeit. Offenbart ist ferner das Gleichgewichts-Phasendiagramm für das Zinn-Zink-System, aus welchem der Schmelzpunkt in Abhängigkeit vom Mischungsverhältnis beider Komponenten ersichtlich ist.

Hiervon ausgehend liegt der vorliegenden Erfindung die Zielsetzung zugrunde, für ein als Anschweißteil mit wenigstens einer Anschweißfläche ausgebildetes Verbindungselement eine geeignete Beschichtung anzugeben, bei dem die Beschichtung auch bei höheren Temperaturen, insbesondere bei einer Temperatur von ca. 300 °C, stabil bleibt.

Diese Zielsetzung wird erfindungsgemäß durch ein Verbindungselement mit den Merkmalen des Anspruchs 1 erreicht. Vorteilhafte Weiterbildungen und Ausgestaltungen des Verbindungselements sind Gegenstand der Unteransprüche.

Das erfindungsgemäße Verbindungselement weist wenigstens eine Beschichtung auf, die wenigstens Zinn und Zink enthält wobei die Beschichtung elektro-galvanisch auf das Verbindungselement aufgebracht und so ausgelegt ist, dass sie bei einer Temperatur von 300 °C stabil ist. Bei dem Verbindungselement handelt es sich vorzugsweise um solche Verbindungselemente, die mit einem Karosseriebauteil verbunden sind. Durch die erfindungsgemäße Ausgestaltung des Verbindungselementes mit der Beschichtung wird erreicht, daß die Beschichtung auch bei höheren Temperaturen, insbesondere bei einer Temperatur von ca. 300 °C, stabil bleibt, da die Mischung aus Zinn- und Zinkkristallen, wobei Zinn und Zink an den Korngrenzen miteinander verbunden sind, eine oberhalb der Schmelztemperatur des Zinns liegende Schmelztemperatur aufweisen. Hierdurch ist es möglich, die so beschichteten Verbindungselemente auch dort zu verwenden, wo diese Verbindungselemente während eines Herstellungsprozesses einer thermischen Behandlung bei einer höheren Temperatur unterzogen werden.

Obwohl die Beschichtung in Form von Zinn-Zink-Kristallen vorliegt, wird die elektrische Leitfähigkeit dieser Beschichtung nicht oder nur unwesentlich beeinflußt, so daß ein Verbindungselement, welches diese Beschichtung aufweist, auch zur elektrischen Kontaktierung verwendbar ist. Insbesondere kann es sich bei dem erfindungsgemäßen Verbindungselement um einen Massebolzen handeln.

Nach einer weiteren vorteilhaften Ausgestaltung kann das Verbindungselement mit einer Karosseriestruktur oder einem Teil einer Karosseriestruktur verschweißt werden. Auch wenn die Anschweißfläche eine Beschichtung, die Zinn-Zink-Kristalle enthält, aufweist, ist überraschenderweise festgestellt worden, daß die erfindungsgemäße Beschichtung den Schweißprozeß bzw. die Festigkeit der Schweißverbindung nicht oder nur in einem geringen Maße beeinflußt, da das Material der Beschichtung nicht oder nur in sehr geringen Mengen in eine Schweißschmelze übergeht. Die Beschichtung bietet jedoch eine gute Korrosionsbeständigkeit, obwohl Zink in der Spannungsreihe unedler als Eisen ist.

Unerwartet ist auch festgestellt worden, daß die Beschichtung enthaltend Zinn-Zink-Kristalle sehr gute Gleiteigenschaften aufweist. Dies beinhaltet, daß der Reibungsbeiwert der Beschichtung relativ gering ist.

Nach einer noch weiteren vorteilhaften Ausgestaltung des Verbindungselementes wird vorgeschlagen, daß dieses wenigstens einen wenigstens teilweise eine Beschichtung aufweisenden Funktionsträger hat. Vorzugsweise weist der Funktionsträger wenigstens einen Befestigungsabschnitt auf, der wenigstens teilweise mit der Beschichtung versehen ist. An dem oder mit dem Funktionsträger des Verbindungselementes können weitere Teile verbunden werden. Insbesondere kann mit dem Funktionsträger eine gute elektrische Verbindung hergestellt werden. Auch die Korrosionsgefahr wird durch die Beschichtung vermieden.

Vorzugsweise ist der Befestigungsabschnitt wenigstens teilweise gewindeartig ausgebildet. Insbesondere handelt es sich dem gewindeartig ausgebildeten Befestigungsabschnitt um ein Außengewinde oder ein Innengewinde. Alternativ oder zusätzlich kann der Befestigungsabschnitt wenigstens eine Klemm- oder Preßfläche aufweisen.

Dadurch, daß die Beschichtung auch bei höheren Temperaturen, insbesondere bei ca. 300 °C, stabil ist, besteht die Möglichkeit beispielsweise an dem Befestigungsabschnitt ein weiteres Teil oder Element anzubringen und diese Einheit einer thermischen Behandlung zu unterziehen. Nach der thermischen Behandlung ist das Teil oder Element von dem Befestigungsabschnitt zerstörungsfrei lösbar. Eine solche zerstörungsfreie Lösung eines Teils oder Elementes von einem Befestigungsabschnitt eines Verbindungselements, wie es nach dem Stand der Technik ausgebildet ist, kann nicht erfolgen, da dadurch, daß das Zinn schmilzt es zu einer Veränderung des Befestigungsabschnittes kommt. Insbesondere wenn der Befestigungsabschnitt gewindeartig ausgebildet ist, schmilzt das Zinn bei Verbindungselementen nach dem Stand der Technik und fließt in Gewindegänge hinein, so daß nach einer Starrung des Zinns eine zerstörungsfreie Lösung des Teils oder Elementes nicht erfolgen kann.

Die Beschichtung weist vorzugsweise eine Dicke zwischen 2 und 20 µm auf Insbesondere wird vorgeschlagen, daß die Beschichtung ca. 8 µm beträgt.

Weitere Einzelheiten und Vorteile der Erfindung werden anhand des in den Zeichnungen dargestellten Ausführungsbeispiels erläutert. Es zeigen:
- Fig. 1: zeigt ein Ausführungsbeispiel eines Verbindungselementes,
- Fig. 2: eine Einzelheit X des Verbindungselementes nach Fig. 1,
- Fig. 3: eine Einzelheit Y des Verbindungselementes nach Fig. 1,

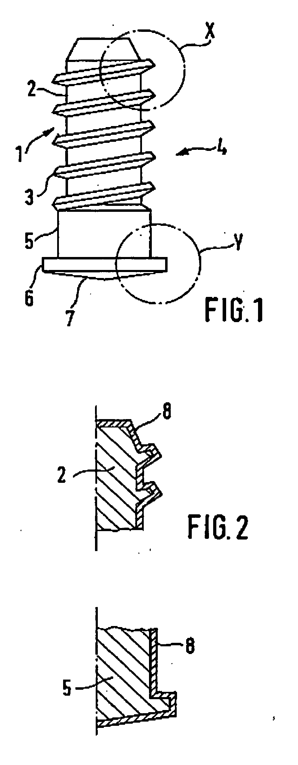

Fig. 1 zeigt ein Ausführungsbeispiel eines Verbindungselementes 1. Bei dem Verbindungselement 1 handelt es sich um einen Massebolzen. Das Verbindungselement 1 weist einen Schaft 2 auf, der einen Befestigungsabschnitt 4 hat. Der Befestigungsabschnitt 4 ist gewindeartig ausgebildet. Er weist ein Außengewinde 3 auf. An den Schaft 2 mit seinem Außengewinde 3 schließt sich ein Kopf 5 an. Der Kopf 5 weist an seinem, dem Schaft 2 gegenüberliegenden, Endbereich ein Anschweißteil 6 auf. Das Anschweißteil 6 weist eine im wesentliche kegelförmig ausgebildete Anschweißfläche 7 auf.

In dem dargestellten Ausführungsbeispiel weist das Verbindungselement eine Beschichtung 8 auf, die Zinn-Zink-Kristalle aufweist. Die Beschichtung 8 ist auf dem gesamten Verbindungselement 1 aufgebracht, wie dies insbesondere aus den Figuren 2 und 3 ersichtlich ist. Die Beschichtung 8 weist vorzugsweise eine Dicke zwischen

### Bezugszeichenliste

- 1: Verbindungselement
- 2: Schaft
- 3: Außengewinde
- 4: Befestigungsabschnitt
- 5: Kopf
- 6: Anschweißteil
- 7: Anschweißfläche
- 8: Beschichtung

## Patentansprüche

1. Verbindungselement, das als ein Anschweißteil (6) mit wenigstens einer Anschweißfläche (7) ausgebildet ist und eine Beschichtung (8) aufweist, die wenigstens Zinn enthält, **dadurch gekennzeichnet, daß** die Beschichtung eine Mischung aus wenigstens Zinn und Zink enthält, wobei die Beschichtung (8) aus einer elektro-galvanisch erhältlichen, kristallinen Abscheidung von Zinn und Zink auf dem Verbindungselement (1) besteht und eine solche Zusammensetzung hat, daß sie bei einer Temperatur von 300 °C stabil ist.

2. Verbindungselement nach Anspruch 1, **dadurch gekennzeichnet; daß** dieses wenigstens einen wenigstens teilweise eine Beschichtung (8) aufweisenden Funktionsträger hat.

3. Verbindungselement nach Anspruch 2, **dadurch gekennzeichnet, daß** der Funktionsträger wenigstens einen Befestigungsabschnitt (4) hat, der wenigstens teilweise die Beschichtung (8) aufweist.

4. Verbindungselement nach Anspruch 3, **dadurch gekennzeichnet, daß** der Befestigungsabschnitt (4) gewindeartig ausgebildet ist.

5. Verbindungselement nach Anspruch 4, **dadurch gekennzeichnet, daß** der Befestigungsabschnitt (4) wenigstens teilweise durch ein Außengewinde (3) gebildet ist.

6. Verbindungselement nach Anspruch 4, **dadurch gekennzeichnet, daß** der Befestigungsabschnitt (4) wenigstens teilweise durch ein Innengewinde gebildet ist.

7. Verbindungselement nach einem der Ansprüche 1 bis 6, **dadurch gekennzeichnet, daß** das Anschweißteil (1) ein Massebolzen ist.

8. Verbindungselement nach einem der Ansprüche 1 bis 7, **dadurch gekennzeichnet, daß** die Beschichtung (8) eine Dicke zwischen 2 und 20 µm, insbesondere 8 µm, aufweist.

## Claims

1. Connecting element designed as a weld-on part (6) with at least one weld-on face (7) and having at least one coating (8) which contains at least tin, **characterised in that** the coating comprises a mixture of at least tin and zinc, wherein the coating (8) consists of an electrogalvanically obtainable crystalline precipitation of tin and zinc on the connecting element (1) and is of such composition that it is solid at a temperature of 300°C.

2. Connecting element according to claim 1, **characterised in that** it has at least one function carrier at least partially comprising a coating (8).

3. Connecting element according to claim 2, **characterised in that** the function carrier has at least one fastening portion (4) at least partially comprising the coating (8).

4. Connecting element according to claim 3, **characterised in that** the fastening portion (4) is designed in the manner of a screw thread.

5. Connecting element according to claim 4, **characterised in that** the fastening portion (4) is at least partially formed by an external thread (3).

6. Connecting element according to claim 4, **characterised in that** the fastening portion (4) is at least partially formed by an internal thread.

7. Connecting element according to anyone of claims 1 to 6, **characterised in that** the weld-on part (1) is an earthing bolt.

8. Connecting element according to anyone of claims 1 to 7, **characterised in that** the coating (8) has a thickness between 2 and 20 µm, in particular of 8 µm.

## Revendications

1. Elément de liaison, qui se présente sous la forme d'un élément de soudure (6) avec au moins une surface de soudage (7) et qui présente un revêtement (8) contenant au moins de l'étain, **caractérisé en ce que** le revêtement contient un mélange constitué au moins d'étain et de zinc, le revêtement (8) étant constitué d'un dépôt cristallin d'étain et de zinc sur l'élément de liaison (1), lequel dépôt peut être obtenu par électrogalvanisation, et ayant une composition telle qu'il est stable à une température de 300 °C.

2. Elément de liaison selon la revendication 1, **caractérisé en ce que** celui-ci a au moins un support de fonction présentant, au moins en partie, un revêtement (8).

3. Elément de liaison selon la revendication 2, **caractérisé en ce que** le support de fonction possède au moins une section de fixation (4) qui présente, au moins en partie, le revêtement (8).

4. Elément de liaison selon la revendication 3, **caractérisé en ce que** la section de fixation (4) se présente dans une forme filetée.

5. Elément de liaison selon la revendication 4, **caractérisé en ce que** la section de fixation (4) est constituée, au moins en partie, d'un filetage externe (3).

6. Elément de liaison selon la revendication 4, **caractérisé en ce que** la section de fixation (4) est constituée, au moins en partie, d'un filetage interne.

7. Elément de liaison selon l'une quelconque des revendications 1 à 6, **caractérisé en ce que** l'élément de soudure (1) est un boulon de masse.

8. Elément de liaison selon l'une quelconque des revendications 1 à 7, **caractérisé en ce que** le revêtement (8) présente une épaisseur comprise entre 2 et 20 µm, en particulier de 8 µm.
